# EUROPÄISCHE PATENTSCHRIFT

(11) **EP 0 993 893 B1**
(45) Veröffentlichungstag und Bekanntmachung des Hinweises auf die Patenterteilung: **31.03.2004**
(21) Anmeldenummer: 99120140.1
(22) Anmeldetag: 08.10.1999
(51) Int. Cl.: B23B 31/20, B23B 31/00

(54) **Einsatz für Gewindebohrer**
Chuck for tap
Mandrin pour taraud

(30) Priorität: 15.10.1998 DE 19847464
(43) Veröffentlichungstag der Anmeldung: 19.04.2000
(73) Patentinhaber: Emuge-Werk Richard Glimpel Fabrik für Präzisionswerkzeuge (vormals Moschkau & Glimpel), D-91207 Lauf (DE)
(72) Erfinder: Kazda, Thomas, 91235 Hartenstein (DE); Glimpel, Helmut, 91207 Lauf a. d. Pegnitz (DE)
(74) Vertreter: Matschkur, Lindner Blaumeier Patent- und Rechtsanwälte

(56) Entgegenhaltungen:
- FR-A- 2 227 077
- US-A- 5 636 851

## Beschreibung

Die Erfindung bezieht sich auf einen Einsatz für Gewindebohrer od. dgl., insbesondere Hartmetallgewindebohrer, mit einer Kegelspannzange, die mittels eines auf den Einsatzkörper aufschraubbaren Spanngliedes gegen einen Gegenkegelabschnitt des Einsatzkörpers verschiebbar ist und mit einer die Drehverbindung bildenden Vierkant-Aufnahme für einen Vierkantendabschnitt des Gewindebohrers. Siehe z.B. US-A-5 636 851.

Üblicherweise sind heutzutage derartige Einsätze so ausgebildet, daß die geschlitzte Kegelspannzange ein gesondertes Bauteil ist, welches durch ein als Überwurfmutter ausgebildetes Spannglied in den Gegenkegelabschnittes des Einsatzkörpers eingedrückt wird und dabei den Schaft eines Gewindebohrers klemmend haltert. Wegen der schlanken Bauform, die zum Einbringen in die im Durchmesser relativ kleinen Einsatzkörper notwendig ist, ergibt sich dabei eine Selbsthemmung, so daß eine erhebliche Kraft notwendig ist, um die Spannzange wieder aus der Klemmeingriffsstellung im Gegenkegelabschnitt des Einsatzes zurückzuholen. Dies wiederum bedingt einen gewissen Überstand, damit ein entsprechendes Löseglied angreifen kann, das ggf. auch ein einspringender Rand der Überwurfmutter sein kann, die in eine Ringnut des Überstandes der Kegelspannzange eingreift. Dies alles hat zur Folge, daß im Vergleich mit Standardeinsätzen ein wesentlich längeres Referenzmaß gegeben ist, also eine vergrößerte Auskraglänge, was beispielsweise beim Weitertakten an Transferstraßen und CNC-Maschinen einen entsprechend höheren Rückzugshub bedeutet, der die Bearbeitungsgeschwindigkeit reduziert. Die Vierkant-Aufnahme für den Vierkantendabschnitt des Gewindebohrers ist bei den bekannten Einsätzen in der Kegelspannzange ausgebildet. Zwischen der Kegelspannzange und dem Einsatz besteht nur ein Reibschluß, wodurch die Drehmomentübertragung begrenzt ist.

Bei den eine kürzere Auskraglänge aufweisenden Standardeinsätzen ohne Kegelspannzange ist zur Auszugsverhinderung ein von der Seite in eine Aussparung des Gewindebohrers eingreifendes federndes Sperrglied vorgesehen. Diese Ausbildung bedingt aber das Vorsehen von Aussparungen an den Gewindebohrern, was insbesondere bei Hartmetallgewindebohrern einen erheblichen zusätzlichen Kostenaufwand bedeutet, insbesondere da man ja berücksichtigen muß, daß für einen Einsatz während seiner Lebensdauer hunderte bis tausende von Bohrern verwendet werden, die alle diese einen Auszug verhindernde Ausnehmung aufweisen müßten.

Der Erfindung liegt daher die Aufgabe zugrunde, einen Einsatz mit einer Kegelspannzange der eingangs genannten Art, bei dem Ausnehmungen der Gewindebohrer selbst nicht notwendig sind, so auszugstalten, daß bei vereinfachtem Aufbau ein gleiches Referenzmaß wie bei Standardeinsätzen möglich ist und bei der auch eine höhere Drehmomentübertragung stattfinden kann.

Zur Lösung dieser Aufgabe ist erfindungsgemäß vorgesehen, daß die Kegelspannzange und das Spannglied ein einstückiges Bauteil bilden und daß die Vierkant-Aufnahme im Einsatzkörper hinter dem Gegenkegelabschnitt eingeformt ist.

Durch die erfindungsgemäße einstückige Verbindung der Kegelspannzange mit dem Spannglied ergibt sich - unter anderem wegen des nicht mehr notwendigen Überstandes zum Angriff eines Löseglieds für die selbsthemmend verklemmte Kegelspannzange - eine kürzere Baulänge und man kann dadurch, noch dazu in Verbindung mit der Einbringung der Vierkant-Aufnahme für den Vierkantendabschnitt des Gewindebohrers im Einsatz, die Länge der Kegelspannzange mit dem Spannglied soweit verkürzen, daß im Endeffekt das gleiche Referenzmaß wie bei Standardeinsätzen mit seitlich federnd in Ausnehmungen der Gewindebohrer eingreifenden Sperrgliedern erreicht werden kann.

Obgleich prinzipiell das einstückig mit der Kegelspannzange verbundene Spannglied nach wie vor auch eine Überwurfmutter sein könnte, hat es sich in weiterer Ausgestaltung der Erfindung als besonders zweckmäßig erwiesen, wenn das Spannglied ein in eine vor dem Gegenkegelabschnitt liegendes Innengewinde einschraubbares Außengewinde aufweist.

Durch die erfindungsgemäße Ausgestaltung ergibt sich der zusätzliche Vorteil, daß das kleinere Bauteil unter anderem auch wegen der fehlenden großvolumigen Überwurfmutter nur ein geringes Schwungmoment aufweist, so daß die Gefahr eines Aufgehens des Gewindes beim Reversieren und damit eines ungewollten Lösens der Spannung des Gewindebohrers erheblich verringert ist. Durch die Anordnung der Vierkant-Aufnahme im Einsatzkörper ergibt sich eine Drehmomentübertragung direkt über Formschluß am Einsatzkörper.

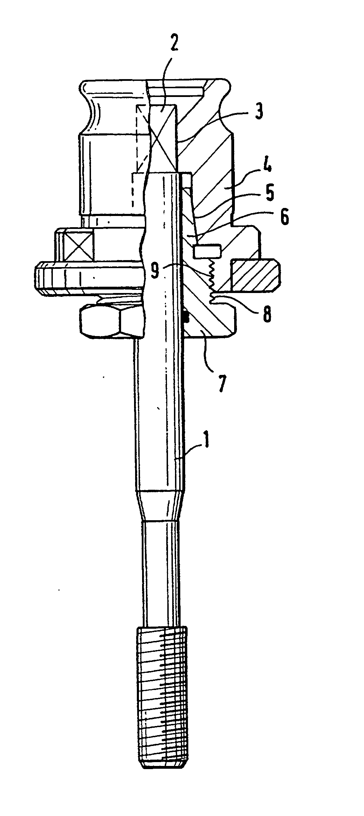

Weitere Vorteile, Merkmale und Einzelheiten der Erfindung ergeben sich aus der nachfolgenden Beschreibung eines Ausführungsbeispiels sowie anhand der Zeichnung, die eine teilweise geschnittene Ansicht eines Einsatzes mit einem darin gespannten Gewindebohrer zeigt:

Der Schaft des Gewindebohrers 1 ist am Ende mit einem Vierkantendabschnitt 2 ausgestaltet, der in eine Vierkantausnehmung 3 des Einsatzkörpers 4 eingreift. Die mit einem Gegenkegelabschnitt 5 zusammenwirkende Kegelspannzange 6 ist einstückig mit einem Spannglied 7 verbunden, das ein Außengewinde 8 aufweist, welches in ein Innengewinde 9 des Einsatzkörpers 4 vor dem Gegenkegelabschnitt 5 einschraubbar ist. Durch dieses Einschrauben und die axiale Verschiebung der Kegelspannzange 6 gegenüber dem Gegenkegelabschnitt 5 verengt sich der Innendurchmesser der Kegelspannzange und klemmt den Schaft des Gewindebohrers 1 sicher fest. Die einstückige Verbindung des Spanngliedes 7 mit der Kegelspannzange 6 verkürzt nicht nur die Baulänge, sondern ermöglicht in sehr einfacher Weise auch das Aufbringen von starken Kräften beim Ausdrehen des Spanngliedes aus der Verschraubung mit dem Einsatzkörper unter Aufhebung der selbsthemmenden Verklemmung zwischen aneinanderliegenden Kegelflächen der Kegelspannzange 6 und des Gegenkegelabschnitts 5.

## Patentansprüche

1. Einsatz für Gewindebohrer od. dgl., insbesondere Hartmetallgewindebohrer, mit einer Kegelspannzange, die mittels eines auf den Einsatzkörper aufschraubbaren Spanngliedes gegen einen Gegenkegelabschnitt des Einsatzkörpers verschiebbar ist und mit einer die Drehverbindung bildenden Vierkant-Aufnahme für einen Vierkantendabschnitt des Gewindebohrers, **dadurch gekennzeichnet, daß** die Kegelspannzange (6) und das Spannglied (7) ein einstückiges Bauteil bilden und daß die Vierkant-Aufnahme (3) im Einsatzkörper hinter dem Gegenkegelabschnitt (5) eingeformt ist.

2. Einsatz nach Anspruch 1, **dadurch gekennzeichnet, daß** das Spannglied (7) ein in eine vor dem Gegenkegelabschnitt (5) liegendes Innengewinde (9) des Einsatzkörpers einschraubbares Außengewinde (8) aufweist.

## Claims

1. Insert for tap or the like, in particular hard metal tap, having a conical collet, which is displaceable against a counter-cone section of an insert body by means of a clamping member capable of screwing on to the insert body, and having a square seat for a square section of the tap, **characterised in that** the conical collet (6) and the clamping member (7) form an integral component and **in that** the square seat (3) in the insert body is formed behind the counter-cone section (5).

2. Insert according to claim 1, **characterised in that** the clamping member (7) has a male thread (8) capable of screwing into a female thread (9) of the insert body, which thread is disposed in front of the counter-cone section (5).

## Revendications

1. Mandrin pour taraud ou analogue, en particulier pour taraud en métal dur, du type comportant une pince de serrage conique qui est déplaçable vis-à-vis d'une contrepartie conique du corps de mandrin grâce à un organe de serrage vissable sur le corps de mandrin et une pièce de réception carrée formant une liaison rotative pour une section terminale carrée du taraud, **caractérisé en ce que** la pince de serrage conique (6) et l'organe de serrage (7) forment un élément constructif en une seule pièce et **en ce que** la pièce de réception carrée (3) est conformée dans le corps de mandrin derrière la contrepartie conique (5).

2. Mandrin selon la revendication 1, **caractérisé en ce que** l'organe de serrage (7) présente un filetage extérieur (8) vissable dans un filetage intérieur (9) du corps de mandrin situé avant la contrepartie conique (5).
